# EUROPEAN PATENT APPLICATION

(11) **EP 2 983 056 A1**
(43) Date of publication of application: **10.02.2016**
(21) Application number: 14778911.9
(22) Date of filing: 31.03.2014
(51) Int. Cl.: G05F 1/67, H02J 7/35, H02S 10/10

(54) **SOLAR PHOTOVOLTAIC POWER GENERATION SYSTEM PROVIDED WITH HYDROGEN PRODUCTION MEANS**

(30) Priority: 05.04.2013 JP 2013079099
(71) Applicant: Hitachi, Ltd., Chiyoda-ku Tokyo 100-8280 (JP)
(72) Inventor: NAITO Hiroto, Tokyo 100-8280 (JP); KAWAMURA Toru, Tokyo 100-8280 (JP); SUGIMASA Masatoshi, Tokyo 100-8280 (JP)
(74) Representative: Beetz & Partner mbB
(86) International application number: PCT/JP2014/059471
(87) International publication number: WO 2014/163044

(57) **Abstract**

A photovoltaic power generation system includes: a photovoltaic power generation device (1); a power conversion controller (3) including an output control function of converting the DC power obtained by the photovoltaic power generation device (1) into an AC power to obtain a maximum electric power; hydrogen producing means (2) for producing hydrogen using the DC power obtained from the photovoltaic power generation device (1); switching means (4) for making switching electrical connection configuration among the photovoltaic power generation device (1), the power conversion controller (3), and the hydrogen producing means (2); and a control unit (6) for transmitting a control signal to the switching means. A rated output of the photovoltaic power generating device (1) is set to be greater than the rated output of the power conversion controller (3). The control unit (6) controls switching means (4) in accordance with a comparison result between the power generation prediction power W₀ and the output power W₁ of the photovoltaic power generation device (1) or the output power W₂ of the power conversion controller (3), and a conversion efficiency characteristic of the power conversion controller (3).

## Description

### TECHNICAL FIELD

The present invention relates to configuration and a drive control method for a system supplying solar light energy as electric energy and storing the solar light energy as chemical energy at a high efficiency.

### PRIOR ART

Recently, photovoltaic cells have attracted attention as clean energy from viewpoint of global environmental protection, and photovoltaic power generation systems have been increasingly introduced, in which the photovoltaic cells installed on a side of electric power consumer (demand) is cooperated with the grid power source of electric power supplier (commercial power source) to supply electric power to power consumers and transmit (sell power) surplus power to other electric power supplier.

The photovoltaic power generation system is a system in which a DC power generated by photovoltaic cells is converted, using a power conditioner (PCS), into an AC power which is supplied to a load, generally, through cooperation with a grid. This type of PCS has a function of obtaining a high output power by MPPT (Maximum Power Point Tracking) control called a maximum power point tracking control disclosed in, for example, Patent Document 1, Patent Document 2 to efficiently acquire power from the photovoltaic cells in addition to a converting circuit such as a boosting circuit and an inverter circuit.

Incidentally, it is general that an input and output power specification has been determined in the PCS in accordance with the conversion circuit and selected devices, etc. In other words, a specification value of a rated output power of PCS is determined as the maximum power value of reverse flow power toward the grid.

Further, solar panels form a solar photovoltaic cell array in which a rated power of the solar panel, the number of solar panels, a configuration, etc. are adjusted in accordance with the input-and-output power specification of the PCS to generally configure a photovoltaic generation system. However, a solar radiation intensity (solar energy) falling on the ground is about 1kW/m². Accordingly, there are few days per year when an energy corresponding to a rated output of the solar panel can be obtained because actually, there is energy scattering and absorbing in the air. More specifically, when a solar photovoltaic cell array is configured having a specification of output power which corresponds to an output specification value of the PCS, a ratio of period for which a maximum output value is outputted by the PCS is extremely small. The PCS has superior conversion efficiency when the input power is large. However, when the PCS has such a characteristic that the input power is smaller than the rated output, the conversion efficiency largely decreases. Accordingly, when the photovoltaic cell array is configured having an output specification equivalent to the rated output of the PCS, the PCS has such a tendency that the input power from the the photovoltaic cell array becomes lower than the rated output of the PCS. This is a cause to decrease a system efficiency of the photovoltaic power generation system due to decreasing of the PCS conversion efficiency.

On the other hand, for example, in Patent Document 3 there is a propose as follows:
A plurality of PCSs having different rated capacities are provided, and one or more of PCSs is selected such that an input ratio of an input power to the rated capacity of the PCS is greater than a predetermined value of the input power.

### PRIOR ART

### PATENT DOCUMENT

Patent Document 1: JP2008-3000745
Patent Document 2: JP2005-235082
Patent Document 3: JP2010-98792

### SUMMARY OF INVENTION

### PROBLEM TO BE SOLVED BY INVENTION

However, in the method of switching a plurality of PCSs having different rated capacities disclosed in Patent Document 3, it is necessary to increase the number of the PCSs having the different rated capacities as the output scale of the system become large. Because a ratio of cost of the PCS in the photovoltaic power generation is large, the method of combining a plurality of PCSs having different rated capacities may invite increase in cost. Further, switching control of converter having different rated capacities in accordance with variable energy means that the number of converts not operating becomes large, so that an operation rate and utilizing rate of the whole of the system are lowered.

Accordingly, it is desired to provide a photovoltaic power generation system which can use a maximum energy of the photovoltaic power generation energy irrespective of kinds of the PCSs.

The present invention aims to provide a photovoltaic power generation system capable of supplying a power at a high efficiency by effectively using the photovoltaic power generation energy.

### MEANS FOR SOLVING PROBLEM

As a result of studying the problems by the inventors of the present invention, the inventors found out that the problem can be solved by connection switching control for an electrolyzing system for producing hydrogen in accordance with at least an AC output setting value for the power convertor controller (power conditioner) by the connection switching control.

More specifically, according to the present invention there is provided a photovoltaic power generation system including hydrogen producing means for storing photovoltaic energy, comprising:
a photovoltaic power generation device for converting photovoltaic energy into a DC power;
a power conversion controller including an output control function of converting the DC power obtained by the photovoltaic power generation device into an AC power to obtain a maximum electric power, the hydrogen producing means producing hydrogen using the DC power obtained by the photovoltaic power generation device;
electric power detecting means for detecting an output power W₁ of the photovoltaic power generation device and an output power W₂ of the power conversion controller;
switching means for making switching electrical connection configuration among the photovoltaic power generation device, the power conversion controller, and the hydrogen producing means;
a control unit for transmitting a control signal to the switching means, wherein
a rated output of the photovoltaic power generating device is set to be greater than a rated output of the power conversion controller, wherein
the control unit includes electric power predicting means for calculating a power generation prediction power W₀ that the photovoltaic power generation device can generate, and wherein
the switching means is controlled in accordance with a comparison result between the power generation prediction power W₀ estimated by the electric power predicting means and the output power W₁ or the output power W₂, detected by the electric power detecting means and a conversion efficiency characteristic of the power conversion controller.

### ADVANTAGEOUS EFFECT OF INVENTION

According to the present invention, the photovoltaic power generation is provided which can supply an electric power efficiently utilizing photovoltaic power generation energy.

### BRIEF DESCRIPTION OF DRAWINGS

Fig. 1 is a schematic drawing showing a configuration of a photovoltaic power generation system including a hydrogen producing means according to a first embodiment of the present invention.
Fig. 2 is a chart schematically showing a connecting condition of a hydrogen producing means in the photovoltaic power generation system including the hydrogen producing means according to the first embodiment of the present invention.
Fig. 3A is a drawing schematically showing a connection mode in a configuration (1) of the photovoltaic power generation system including the hydrogen producing means.
Fig. 3B is a drawing schematically showing a connection mode in a configuration (2) of the photovoltaic power generation system including the hydrogen producing means according to the first embodiment of the present invention.
Fig. 3C is a drawing schematically showing a connection mode in a configuration (3) of the photovoltaic power generation system including the hydrogen producing means according to the first embodiment of the present invention.
Fig. 3D is a drawing schematically showing a connection mode in a configuration (4) of the photovoltaic power generation system including the hydrogen producing means according to the first embodiment of the present invention.
Fig. 4 is a drawing schematically showing an operation driving conditions and an operation procedure of the photovoltaic power generation system including the hydrogen producing means according to the first embodiment.
Fig. 5 is a chart for comparing respective electric power conversion efficiency characteristics of the photovoltaic power generation systems including the hydrogen producing means according to the first embodiment of the present invention.
Fig. 6 is a chart for schematically showing a photovoltaic power generation characteristic of the photovoltaic power generation system including the hydrogen producing means according to the first embodiment of the present invention and an apparent photovoltaic power generation characteristic when a power is inputted into the power conversion controller including the hydrogen producing means is connected.
Fig. 7A is an equivalent circuit diagram of the photovoltaic power generation system including the hydrogen producing means according to the first embodiment of the present invention.
Fig. 7B is a chart for showing variations in a voltage-current characteristic regarding a series resistance component in the photovoltaic power generation system including the hydrogen producing means according to the first embodiment of the present invention.
Fig. 7C is a chart for showing variations in a voltage-power characteristic regarding the series resistance components in the photovoltaic power generation system including the hydrogen producing means according to the first embodiment of the present invention.
Fig. 8 is a diagram schematically showing the photovoltaic power generation system including the hydrogen producing means according to a second embodiment of the present invention.
Fig. 9 is a diagram schematically showing the photovoltaic power generation system including the hydrogen producing means according to a third embodiment of the present invention.

### MODES FOR CARRYING OUT INVENTION

Hereinafter, a photovoltaic power generation system including a hydrogen producing means according to the embodiment is described with specific examples referring to drawings.

### [1. First embodiment]

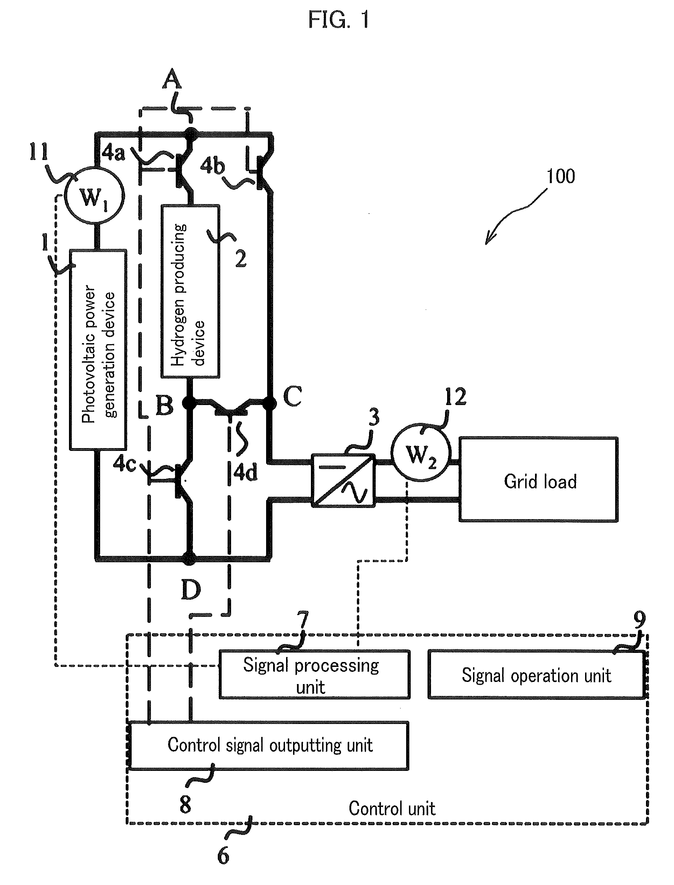

Fig. 1 is a schematic drawing schematically showing a configuration of a photovoltaic power generation system including a hydrogen producing means according to a first embodiment of the present invention. In Fig. 1, solid lines indicate electric wirings, broken lines indicate switching signal output lines, dotted lines indicate measurement signal lines, respectively, which are wirings for connecting respective means and indicate transmitting and receiving signals and energy therebetween.

As shown in Fig. 1, a photovoltaic power generation system 100 including a hydrogen producing means according to the first embodiment can use, store, and supply photovoltaic energy at a high efficiency. The photovoltaic power generation system 100 including the hydrogen producing means is configured at least including: a photovoltaic power generation device 1 as a renewable energy power generation means; a hydrogen producing device 2 as a hydrogen producing means; a power conversion controller 3 for converting an optimum DC power of the photovoltaic power generation power into an AC power; a switching means 4 for switching an electrical connection configuration of the hydrogen producing device 2 and the power conversion controller 3;
an electric power detecting means for detecting an output power W₁ outputted by the photovoltaic power generation device 1 and the output power W₂ outputted by the power conversion controller 3 (a power detectors 11, 12); and a control unit 6 for controlling a whole of the system. In the photovoltaic power generation system according to the first embodiment, a rated output power of the photovoltaic power generation device 1 is set to be greater than a rated output power of the power conversion controller 3. This intends to increase a conversion efficiency of the power conversion controller 3 under a condition of solar radiation intensity which is lower than that in case where the rated output powers of the photovoltaic power generation device 1 and the power conversion controller 3 are equivalently set in output specification.

The solar light energy as a renewable energy does not need an electric or physical connection lines, wiring, etc. with the photovoltaic power generation device 1 but depends on a whether condition of the earth.

The photovoltaic power generation device 1 is a device for converting the photovoltaic energy into a DC power and is electrically connected to the hydrogen producing device 2 and the power conversion controller 3 in which electrical connection configuration is switched by the switching means 4. The power generated by the photovoltaic power generation device 1 is supplied to the grid through the power conversion controller 3. Further, the photovoltaic power generation device 1 is connected to the hydrogen producing device 2 with the switching means 4 to supply the power generated by the photovoltaic power generation device 1 to the hydrogen producing device 2 to convert the electric power generated by the photovoltaic power generation device 1 into a hydrogen energy to store or supply the electric power as a chemical energy.

The hydrogen producing device 2 is a device for generating hydrogen using the electric power obtained by the photovoltaic power generation device 1. More specifically, in the hydrogen producing device 2, at least hydrogen is produced through electrolysis of an electrolyte using these powers. Accordingly, the greater the power supplied to the hydrogen producing device 2 from the photovoltaic power generation device 1, the greater the quantity of hydrogen produced in the hydrogen producing device 2 becomes. The hydrogen producing device 2 is electrically connected to the photovoltaic power generation device 1 through the switching means 4.

A specific configuration of the hydrogen producing device 2 is not limited, but the hydrogen producing device 2 includes, for example, an electrolytic cell containing an electrolytic solution, an electrolyte, an electrode catalysis, an electrode catalyst for reaction-promoting disposed to sandwich the electrolyte, and a current collector for supplying external powers, etc. The electrode catalyst electrolyzes water with the electrode catalyst to produce hydrogen and oxygen. In the present invention, the electrolytic cell or an electrolytic stack including a multiple-layered electrolytic cell is defined as the hydrogen producing device 2. The hydrogen producing device 2 is configured connecting a plurality of electrolytic stacks such that electrical connection configuration can be switched.

There is no limitation in the electrolytic solution as long as the electrolytic solution can produce at least hydrogen through electrolyzing. For example, a compound, indicating alkalinity when the compound is dissolved in water such as potassium hydroxide, is preferable. Using such a compound provides the hydrogen producing device 2 at a low cost with resistance to corrosion. Further, for example, an electrolyte of the solid high polymer type electrolyte having ion conductivity is usable.

The hydrogen producing device 2 configured as described above can be operated at a low temperature and has such an advantageous effect that the device can be started up shortly.

The electrolyzing condition of water is not specifically limited, but any given condition can be set as long as at least hydrogen is generated. However, when a temperature during electrolysis is increased to increase an electrolyzing efficiency, it is required to consider a temperature control algorism.

The power conversion controller 3 has a function of obtaining a high output power by MPPT (Maximum Power Point Tracking) called a maximum power tracking control to provide a higher efficiency in converting the power from the photovoltaic cell in addition to including a boosting circuit and an inverter circuit. The system is not limited to the MPPT control method, but may be a system capable of converting a maximum power generated by the photovoltaic cell into an AC power to be externally supplied in cooperation with the grid.

The switching means 4 is not specifically limited in a component material and configuration as long as the switching means 4 has a function of electrically cutting off and conducting in response to a command from a control signal outputting unit 8. For example, one of a switch with a mechanical contact, a relay, a semiconductor switching element, etc. can be freely selected. However, an electrical specification requires matching in a designing stage, and the switching means can be selected a matched one in accordance with a scale of the system.

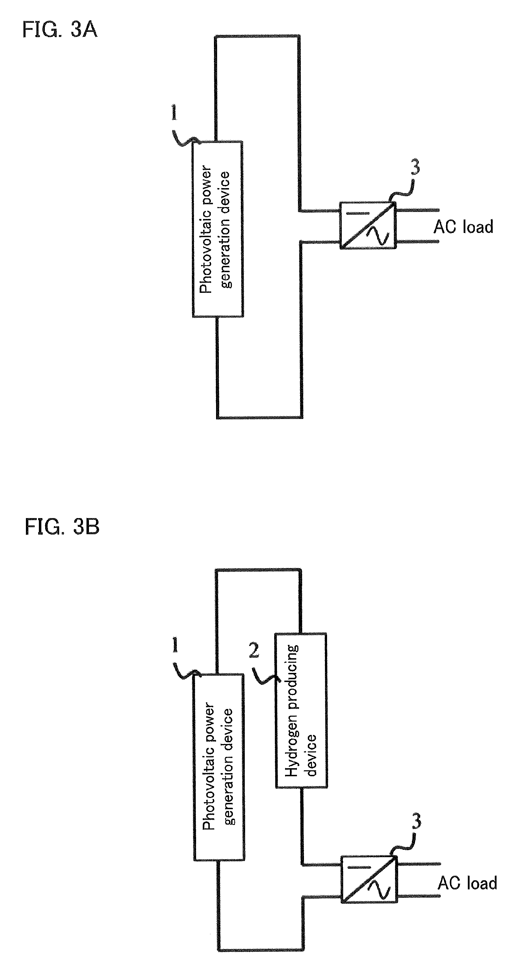

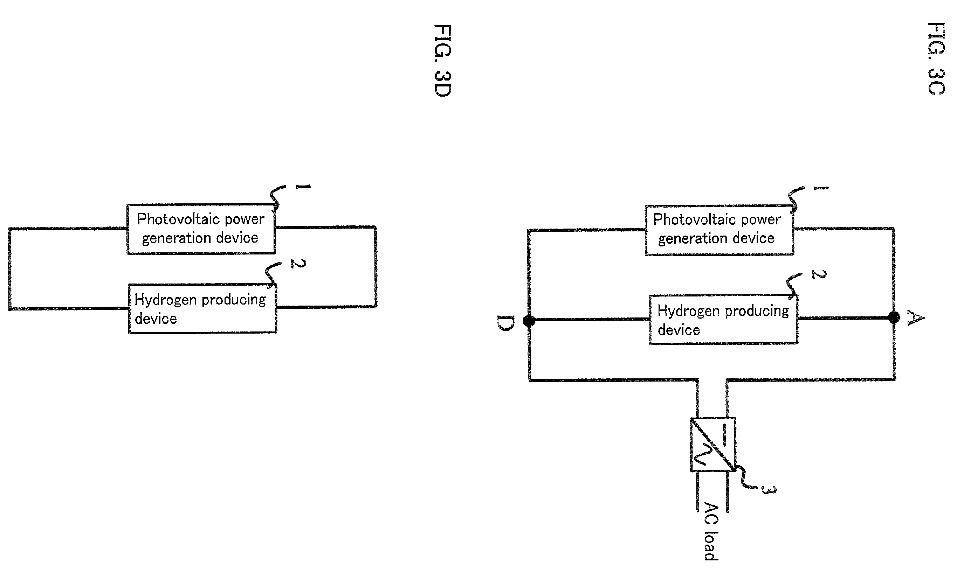

Fig. 3 shows an example having a connection configuration switchable with the switching means 4. A configuration (1) in Fig. 3A has such a configuration that the photovoltaic power generation device 1 is electrically connected to only the power conversion controller 3 by turning off swatches 4a, 4c, 4d in Fig. 1 and turning on a switch 4b. A configuration (2) in Fig. 3B has such a configuration that the photovoltaic power generation device 1 is electrically connected to the hydrogen producing device 2 and the power conversion controller 3 in series by turning off switches 4b, 4c in Fig. 1 and turning on switches 4a, 4d. A configuration (3) in Fig. 3C has such a configuration that the photovoltaic power generation device 1 is electrically connected to the hydrogen producing device 2 and the power conversion controller 3 in parallel by turning off the switch 4a in Fig. 1 and turning on switch 4a, 4c. A configuration (4) in Fig. 3D has such a configuration that the photovoltaic power generation device 1 is electrically connected to only the hydrogen producing device 2 by turning off switches 4b, 4d in Fig. 1 and turning on the switches 4a, 4c.

The control unit 6 includes a signal processing unit 7 for processing respective measurement signals, the control signal outputting unit 8 for outputting control signals to the switching means 4, and a signal operation unit 9. The signal operation unit 9 performs operation such as calculating a power generation predicted power W0 of the photovoltaic power generation device from a panel temperature estimated by a voltage and a current of a photovoltaic array and an estimated solar radiation intensity.

### <Operation>

Next, in the photovoltaic power generation system 100 including hydrogen producing means according to the present embodiment, operation of the switching means 4 for switching connection between the hydrogen producing device and the power conversion controller is described with reference to Figs. 1 to 7.

First, the photovoltaic power generation device 1 generates a DC power using the solar light energy. The generated DC power is converted into an AC power through the power conversion controller 3 and supplied to the grid.

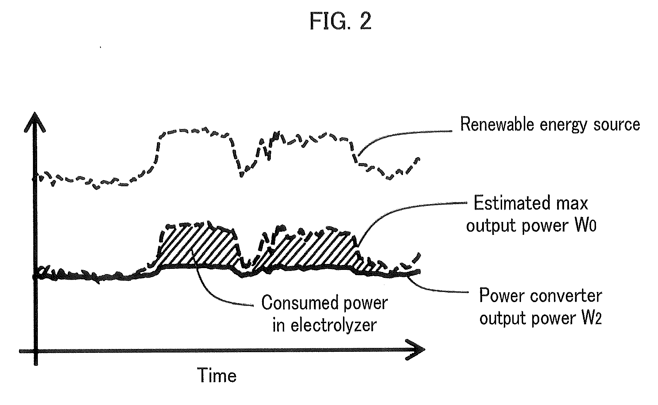

As shown in Fig. 2, a power generation predicted power W0 of the photovoltaic power generation device 1 varies in accordance with time variation, for example, solar radiation intensity for the solar light energy as a renewable energy source. When a maximum output power of the photovoltaic power generation device 1 is greater than the rated output power of the power conversion controller 3, there may a case where the power generation predicted power W₀ of the photovoltaic power generation device 1 exceeds the rated output power of the power conversion controller 3. When only the power conversion controller 3 is connected to the photovoltaic power generation device 1, it does not occurs that a power exceeding the rated output power of the power conversion controller 3 in the photovoltaic power generation device 1, so that solar light energy is insufficiently used. Accordingly, in the photovoltaic power generation system according to the present embodiment, when the power generation predicted power W₀ of the photovoltaic power generation device 1 exceeds the output power W₂ of the power conversion controller 3, the switching means 4 switches the connection configuration, so that a connection configuration of the hydrogen producing device 2 and the power conversion controller 3 is made serial and/or parallel connection relative to the photovoltaic power generation device as shown in the configuration (2) in Fig. 3B or the configuration (3) in Fig. 3C. As described above, the connection configuration is switched, so that a surplus power of which magnitude exceeds the rated output power of the power conversion controller 3 is supplied to the hydrogen producing device 2 where electrolysis is started and hydrogen is produced. In this state, the output power W₂ of the power conversion controller 3 is required to keep the output irrespective of influence of the connection of the hydrogen producing device 2.

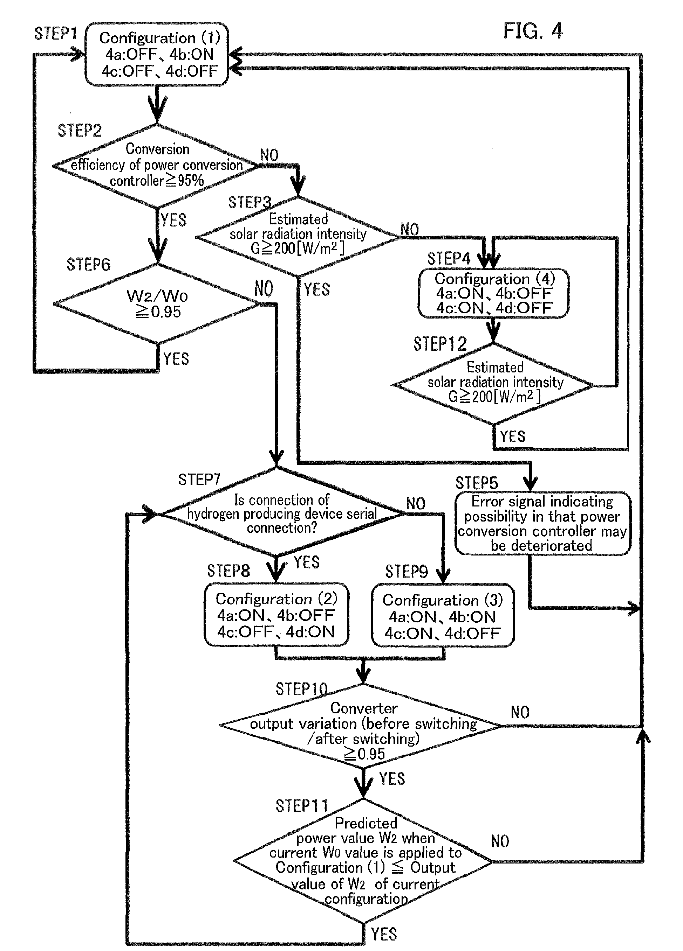

When system interconnection is prioritized by setting the configuration (1) in Fig. 3A as a basic structure, in a system operation, a system control can be performed on the basis of the control flow chart shown in Fig. 4. If STEP1 is a start point, a determination is made whether the conversion efficiency of the power conversion controller 3 is equal to or greater than a predetermined value in STEP2. For example, if it is assumed that a predetermined value of the conversion efficiency is 95%, the conversion efficiency is calculated from the output power W₁ and the output power W₂ of the power conversion controller 3, and it is determined whether the calculation result is equal to or greater than the predetermined value of 95%.

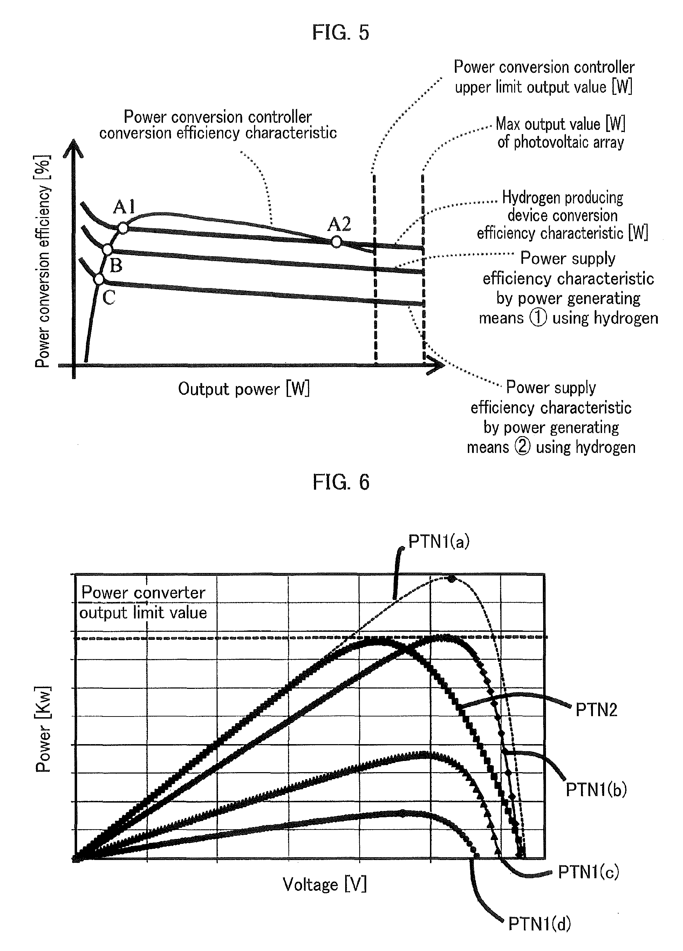

STEP3 is a determination flow made when the determination in STEP2 is NO. In this case, as a cause that as the conversion efficiency does not fill the predetermined value, there is a decrease in an estimated solar radiation intensity, being a renewable energy source. The power conversion controller 3 has such a characteristic that the conversion efficiency varies in accordance with the output power of the power conversion controller 3 as shown in Fig. 5. This is because of variation in a ratio of power consumed in the power converter relative to an output power of the power conversion controller 3 and variation in a ratio of a quantity of loss by an internal resistance. Therefore, the conversion efficiency tends to be extremely low at a low output power region and to be a value lower than the maximum efficiency at a high output power region. Accordingly, in STEP3, it is determined whether the estimated solar radiation intensity corresponds to that in a low output power region. Here, a case is exemplified in which a reference value for the solar radiation intensity used for determining whether the solar radiation intensity in STEP3 corresponds to that in the low output power region or not, is 200 [W/m²]. However, this varies with an output power and a power conversion efficiency as shown in Fig. 5, and the present invention is not limited to this. Following are determination references as to whether the solar radiation intensity corresponds to that in the low power output region. In the low output region, there are regions having conversion efficiency by chemical fuel storage higher than conversion efficiency by the electric power conversion controller on one side from a border at the points A1, B, C, etc. The point A1 is a point where the conversion efficiency by the electric power conversion controller becomes substantially equal to the conversion efficiency of converting electric power into hydrogen by the hydrogen producing device 2. The point B is a point where the conversion efficiency by the electric power conversion controller becomes substantially equal to an electric power supplying efficiency in a case where an electric power is generated using the hydrogen produced by the hydrogen producing device 2 as a fuel. The point C is a point becoming equivalent to an electric power supplying efficiency where an electric power is generated with the power generating means using the hydrogen produced by extracting hydrogen from organic hydride in which hydrogen produced by the hydrogen producing device 2 was stored in a state of the organic hydride. Further, electric power supplying efficiencies at points B and C are electric power supplying efficiencies of electric power energy which can be finally supplied to the grid or other loads by the power generating means relative to the electric power energy generated by the photovoltaic power generation device 1.

STEP4 is a process executed when it has been determined in the STEP3 that the estimated solar radiation intensity, which is weak and corresponds to the low output region. The control signal outputting unit 8 of the control unit 6 supplies a control command value to the switching means 4 to have a connection mode of the configuration (4) in Fig. 3D. As described above, with reference to a value of conversion efficiency of the chemical storage or a value of the electric power supplying efficiency of a power generating means using the chemical fuel storage, switching is made from electric power supply to the grid through the power conversion controller 3 to the chemical fuel storage using the hydrogen producing device 2 having the configuration (4). This makes it possible to efficiently and effectively use solar light energy. After this as long as the low intensity of illumination continues in STEP12, a processing is made to maintain the configuration (4). When the intensity of the illumination is increased, the configuration returns to the configuration (1).

STEP5 is a process executed when it is determined in STEP3 that the estimated solar radiation intensity corresponds to the high output region. However, when the electric power conversion efficiency is lower than 95%, and the estimated solar radiation intensity is high, there may be a case where an error occurs due to deterioration in the power conversion controller 3 and the peripheral devices. In STEP5, the control unit 6 outputs an error signal indicating there may be an error.

Next, STEP6 is a process executed when it is determined in STEP2 that the electric power conversion efficiency calculated by dividing between the output electric power W₁ by the photovoltaic power generation device 1 and the output electric power W₂ by the power conversion controller 3 is equal to or greater than 95%. In this case, the signal operation unit 9 calculates the solar radiation intensity and a panel temperature at the measuring time from the voltage value of the output power W₁, a current value, and an initial rated output power of the photovoltaic power generation device. Further, the signal operation unit 9 calculates a predicted maximum electric power W₀, which can be outputted by the photovoltaic power generation device 1, from the estimated solar radiation intensity or the estimated panel temperature, which are calculated by the signal operation unit 9. Further, the calculating method of predicting a maximum predicted electric power W₀ is not limited to this, but a well-known method can be applied. In STEP6, a determination is made whether there is a surplus power from a relation between the maximum predicted electric power W₀ by the photovoltaic power generation device 1 and the output power W₂ of the power conversion controller 3. In an example in Fig. 4, it is confirmed that W₂/W₀ is equal to or greater than 0.95 (more specifically equal to or greater than 95%). When the result is true, the configuration (1) is maintained. Further, this may be determined using a relation between the predicted electric power W₀ and an actual output power W₁ by the photovoltaic power generation device 1 (W₁/W₀).

STEP7 is executed when a result in STEP6 is no. In this case, though the electric power conversion efficiency is equal to or greater than 95%, it is in an energy surplus state because the predicted electric power W₀ exceeds the actual output power. Accordingly, surplus energy collection becomes possible by connecting the hydrogen producing device 2, which can increase the recovery rate. The hydrogen producing device 2 can select one of the serial connection and a parallel connection in this process. Further, the hydrogen producing device 2 has such a configuration that a plurality of electrolytic stacks are electrically connected and a control means for switching an electrical connection configuration of the electrolytic stacks.

When the parallel connection is selected, a process in STEP9 is performed to have a connection configuration of the configuration (3) in Fig. 3C. In this case, it is necessary to select the number of the electrolytic stacks to be operated to get in conformity with an input voltage value of the power conversion controller 3. Further, when configuration is made to control the number of cells forming the the electrolytic stack, it becomes possible to select the number of the cells. For example, in the electrolyzing water, a potential to start the electrolysis is generally from 1.47 to 1.48/cell. On the other hand, though an output of the power conversion controller 3 depends on the product, it is generally hundreds volts, and it is assumed that the output voltage is 300V. In other words, it is understood that the electrolyzing configuration having a serial connection cell configuration including 203 to 204 cells at maximum. Actually, it is necessary to design the cell configuration having the number of cells which is smaller than this because hydrogen gas cannot be obtained if the cell configuration is designed with the electrolysis start potential. Regarding a characteristic of the hydrogen producing device 2, it is necessary to calculate a driving electrolysis potential per a unit cell in consideration of environment such as an electrolytic solution temperature and a pressure in an electrolytic bath, a wiring resistance, a resistance component of an electrolytic bath, a variation in quantity of electrolysis potential caused by electrolytic solution components, etc. An optimal the-number-of the cells is calculated to control the connection configuration of the electrolytic stack forming the hydrogen producing device 2.

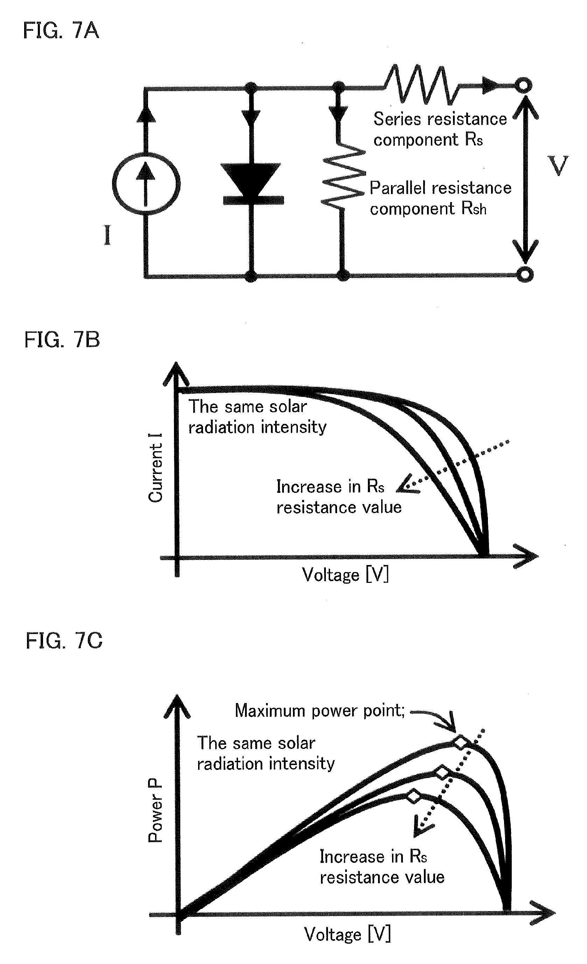

When the serial connection is selected, the process in STEP8 is performed to have the connection configuration (2) shown in the configuration in Fig. 3B. In this case, the number of the electrolytic stacks and/or the number of cells can be selected in accordance with a predicted generation current I₀ and a predicted generation voltage V₀, an output power W₂ of the power conversion controller 3, which are estimated from an estimated solar radiation intensity. For example, the photovoltaic power generation characteristic varies in accordance with a variation in solar radiation intensity as shown by photovoltaic power generation characteristics PTN1(a) to PTN1(d) shown in Fig. 6. A situation in which the power generation predicted power W₀ exceeds an output power of the power converter corresponds to the characteristic of the photovoltaic power generation characteristics PTN1(a). Here, because at the power generation predicted power W₀, the voltage is V₀ and the current is I₀, a circuit current of the serial connection configuration of the hydrogen producing device 2 and the power conversion controller is I₀. Accordingly, to maintain the output power W₂ of the power conversion controller, an input voltage value is obtained by V_{21N} = (W₂/conversion efficiency)/I₀. In other words, an operation voltage of the hydrogen producing device 2 is calculated by the V_{hydrogen producing device} = (V₀ - V_{21N}). Accordingly, when a voltage-current characteristic per cell of the hydrogen producing device is previously known, it is possible to obtain an approximated value of the number of necessary cells from an operation current I₀ and an operation voltage V _{hydrogen producing device}, and switching control of configuration is performed to have the serial connection configuration. In addition, because the hydrogen producing device, being a load, is connected to photovoltaic cells in serial, an apparent photovoltaic power generation characteristic inputted to the power conversion controller varies from PTN1(a). For example, generally an equivalent circuit of the photovoltaic cell has, as shown in Fig. 7A, a configuration in which a serial connection component is connected in series to a parallel connection including a current source, a diode, and a parallel resistance component. When the serial resistance component increases, an output power tends to decrease. Like a photovoltaic cell resistance component increasing characteristics shown in Figs. 7B and 7C, characteristics vary in a left-downward in both the voltage-current characteristic and the voltage-power characteristics. In other words, when the hydrogen producing device, being the load, is connected in series to the PTN1(a) characteristic (configuration 2), the apparent photovoltaic power generation characteristic inputted into the power conversion controller becomes PTN2. In this operation, a condition becomes necessary which satisfies an upper limit value of the output, an input voltage, and input current range, of the power conversion controller.

Next, STEP10 is a process for confirming a variation ratio, i.e., confirming whether the output W₂ of the power conversion controller is maintained after switching the connection configuration in STEP8 or STEP9. At this process and setting value are made such that, when the output W_{2after} the connection configuration switching is equal to or greater than 95% relative to the output W_{2 before} the connection condition switching, processing proceeds to STEP11 and when it is smaller than 95%, switching is made to the configuration (1). However, the setting values are values necessary for the system operation, but may be not limited to this. For example, it is allowed that W₂ varies in accordance with switching of the connection configuration, and when a system operation is desired to mainly perform hydrogen production, it is allowed to lower the setting values.

STEP11 is a process of confirming whether an energy recovery rate in the case where the configuration is returned to the configuration (1) is higher. Here, in the configuration (1), when the output value W₂ of the power conversion controller predicted by the power generation predicted power Wo predicted at this timing exceeds the output power W₂ of the power conversion controller in the current configuration (i.e., configuration (2) or configuration (3)), it is better to return to the configuration (1). If not so, maintaining the current connection configuration provides a higher energy recovery rate. However, as long as such a process is used, a content of the process may not be equivalent to the content described in STEP11.

As described above, the connection switching means for the hydrogen producing device and the power conversion controller has been described using Fig. 4. However, these are all related to the operation system operating method, and are not limited to Fig. 4, but may be modified in accordance with needs of the system operator. This is true for the values described in Fig. 4, and may be modified in accordance with the operation method. Further, it is desirable that the values are caused to have allowable error ranges and a function of maintaining the current configuration for a predetermined period after the switching is added to suppress a frequent configuration switching.

### <In summary>

As described above, according to the photovoltaic power generation system 100 including the hydrogen producing means according to the first embodiment, it is possible to use, store, and supply the photovoltaic energy at a high efficiency.

### [2. Second embodiment]

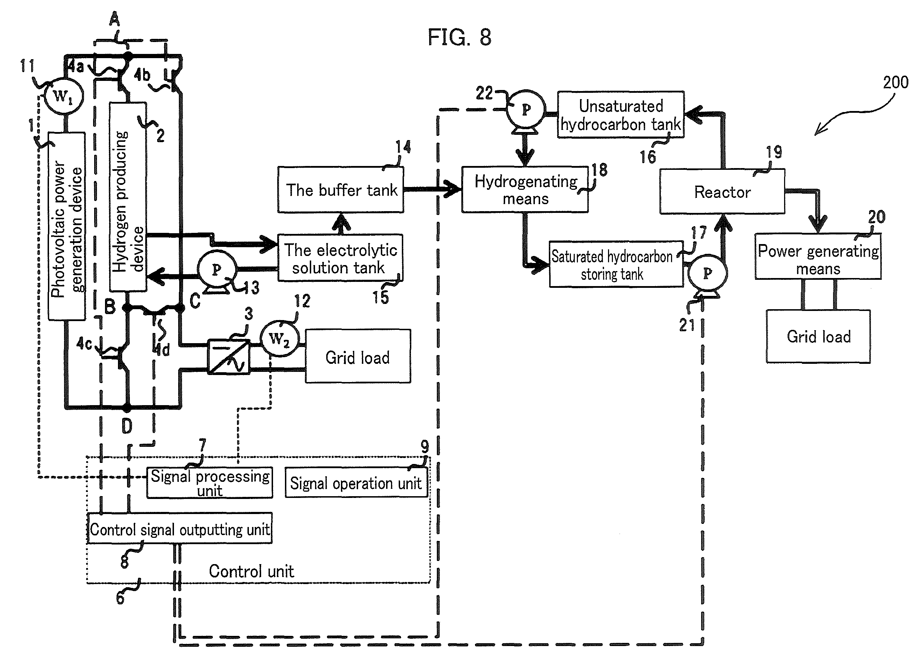

Fig. 8 is a drawing schematically showing a photovoltaic power generation system including the hydrogen producing means according to a second embodiment of the present invention. In Fig. 8, solid lines indicate electric wirings, braked lines indicate switching signal output lines, dotted lines indicate measurement signal lines, double liens indicates fuel (gas, liquid), respectively which are wiring and piping for connecting respective means and transmitting and reception of signals and energy and substances.

As shown in Fig. 8, a photovoltaic power generation system 200 including the hydrogen producing means according to the second embodiment can use, store, and supply the photovoltaic energy at a high efficiency.

The system has a configuration including, in addition to the photovoltaic power generation system 100 including the hydrogen producing means as shown in Fig. 1, a tubing pump 13 for transferring the electrolytic solution to the hydrogen producing device 2; an electrolytic solution tank 15 for storing the electrolytic solution and performing gas liquid separation between a hydrogen gas and the electrolytic solution; a buffer tank 14 for purifying the hydrogen gas; an unsaturated hydrocarbon tank 16 for storing unsaturated hydrocarbon; a saturated hydrocarbon storing tank 17 for storing saturated hydrocarbon; a hydrogenating means 18 for hydrogenating unsaturated hydrocarbon with a hydrogen gas to obtain saturated hydrocarbon; a reactor 19 for separating saturated hydrocarbon into unsaturated hydrocarbon and hydrogen; a power generating means 20 as an electric power supplying means using the hydrogen gas; a saturated hydrocarbon supplying means 21; and an unsaturated hydrocarbon supplying means 22.

Hereinafter, a background of proving the configuration of the photovoltaic power generation system 200 including hydrogen producing means is described.

Because a magnitude of the photovoltaic power generation varies, a generated power quantity (power supplying quantity) is not always equal to an electric power demand quantity. To equalize the demand quantity to the supply quantity of the electric power within a short period, a storage device and a control system become necessary, the storage having a superior responsiveness such as a capacitance or a secondary battery, etc. which can once store an electric power and output it when necessary. Further, to supply the electric power stable for a short or middle term such as day and night and long terms, in addition to the capacity enlargement which is a method described above, there is a method of storing energy by chemical energy conversion, i.e., a method of conversion of waste to fuel. Among them, a notable one is hydrogen energy as a Fossil fuel substitute materials.

As a hydrogen producing method, a steam reforming a fossil fuel is widely used in the industry. In addition, there are many producing methods which are known such as by-product hydrogen accompanied with production of iron or soda, a thermal decomposition, a photocatalyst, microbe, or a reaction using electrolysis of water, etc. Among them, it is possible to use an electric power from various supply sources as a power necessary for the electrolysis of water. Accordingly, the method of producing hydrogen by electrolysis of water is regarded as important as energy not depending on a specific area.

However, to use hydrogen as an energy source, i.e., fuel, there are problems in transporting, storing, supplying systems, etc. More specifically, because hydrogen is a gas at a normal temperature under a normal pressure, there are problems in storing and transporting relative to a liquid and a solid. Further, hydrogen is a combustible material, and may react explosively when hydrogen and the air are mixed at a predetermined mixing ratio.

In a technology for solving the problem, for example, an organic hydride system using, for example, a hydrocarbon such as Cyclohexane, decaline, etc. is noticed recently as a hydrogen storing method superior in safeness, portability and storage power. Because these hydrocarbons are liquid at ordinary temperature and normal pressure, they can be easily stored and transported than the case of gases. For example, benzene and Cyclohexane are cyclic hydrocarbons having the same number of carbons. Benzene is an unsaturated hydrocarbon having a double bond, on the other hand, Cyclohexane is a saturated hydrocarbon having no double bond. In other words, hydrogen is added to benzene, being an unsaturated hydrocarbon, so that Cyclohexane, being an unsaturated hydrocarbon is obtained. On the other hand, hydrogen is desorbed from Cyclohexane, so that benzene is obtained. As described above, using a hydrogenation reaction and a dehydrogenation reaction with benzene and Cyclohexane, a system capable of storing and supplying hydrogen is provided.

The photovoltaic power generation system 200 including the hydrogen producing means uses this technology and performs a switching control of the power conversion controller 3 and the hydrogen producing device 2 to efficiently use, store, and supply the photovoltaic power generation power, which is a variable electric power.

Hereinbelow, respective components and a system operation of the photovoltaic power generation system 200 including the hydrogen producing means are described.

The hydrogen producing device 2 is a device for producing hydrogen using an electric power obtained by the photovoltaic power generation device 1. More specifically, in the hydrogen producing device 2, at least hydrogen is produced by electrolyzing an electrolytic solution using these powers. Accordingly, the greater quantity of power supplied to the hydrogen producing device 2 from the photovoltaic power generation device 1, the greater quantity of hydrogen is produced. The hydrogen producing device 2 is electrically connected to the photovoltaic power generation device 1 through the switching means 4 and connected to the tubing pump 13 and the electrolytic solution tank 15 with pipes.

Further, the hydrogen producing device 2 preferably includes a plurality of cell stacks each including a plurality of electrolytic stacks and preferably includes a switching function of selecting connection configuration of cell stacks electrically connected in serial or parallel. With these configurations, while the output power of the power conversion controller 3 is maintained, the variable electric power in the photovoltaic power generation is absorbed by the water electrolyzer and used in hydrogen production and storage.

Further, the configuration may include the buffer tank 14 for purification of hydrogen gas and gas liquid separation; the tubing pump 13 for supplying the electrolytic solution to the hydrogen producing device 2, the electrolytic solution tank 15 for the gas liquid separation of bubbles in the circulated liquid; and the hydrogenating means 18 at least. In addition, a thermal control means for heating the electrolytic solution may be provided. Though a specific configuration of the electrolytic solution tank 15 is not specifically limited, the electrolytic solution tank 15 aims purification of hydrogen by separation between hydrogen babble components and the electrolytic solution produced by the hydrogen producing device 2. There is a method using removal of liquid before supplying to the hydrogenating means 18 through the buffer tank 14, etc. For example, a gas liquid separation device corresponds to it.
A gas liquid separation device is not limited to a specific configuration. For example gas-liquid separation by cooling and hydrogen separation membrane, etc. can be used. Among them, it is preferable to use the hydrogen separation membrane. The removed liquid circulates in the hydrogen producing device 2 and the liquid is electrolyzed.

The hydrogen after removal of water is supplied to the hydrogenating means 18 through a buffer tank connected with a gas pipe. Further, the hydrogen after removal of water may be directly supplied to the hydrogenating means 18. A hydrogenation efficiency can be further increased by supplying the hydrogen through a pressure adjusting device. In other words, a renewable energy can be stored without loss.

Though not shown in Fig. 8, it is possible to temporarily store the hydrogen in a hydrogen storing means such as a high pressure tank. Configuration of the hydrogen storing means is not specifically limited. For example, a known hydrogen cylinder, a pressure vessel, etc. for a high pressure gas can be used. These may be solely configured with one type of them is provided and configured in combination of more than one types of them are provided. As the material forming the hydrogen storing means, there is, for example, a steel plate and a resin reinforced with carbon fiber, etc. and particularly it is preferable to use a pressure resistant vessel having a resistant pressure higher than a pressure in the hydrogen producing device 2.

Further, a hydrogen absorbing alloy is usable as the hydrogen storing means. As the hydrogen absorbing alloy, for example, there are AB5-type alloys such as rare earth metal-Ni system, and metals, etc having a body-centered cubic (BCC) structure such as titanium system alloys, and chromium system alloys, etc. It becomes possible to increase a storage quantity of hydrogen by placing these hydrogen absorbing alloys in the above-disclosed vessel, etc. Further, it is possible to decrease a pressure in the hydrogen storing means when hydrogen having the same volume is stored.

It is preferable that the buffer tank 14 is connected to the hydrogenating means 18 with gas piping (pipe line). However, it is not necessary that these are connected with gas piping. For example, it is also possible to transport the produced hydrogen with a high pressure tank, etc, i.e., hydrogen is supplied to the hydrogenating means 18.

The hydrogenating means 18 adds hydrogen produced by the hydrogen producing device 2 to unsaturated hydrocarbon. The hydrogenating means 18 is connected to the buffer tank 14 with gas-piping, the saturated hydrocarbon storing tank 17 with liquid-piping, and the unsaturated hydrocarbon tank 16 through the unsaturated hydrocarbon supplying means 22 with liquid-piping. Accordingly, unsaturated hydrocarbon is supplied from the unsaturated hydrocarbon tank 16 to the hydrogenating means 18 with the unsaturated hydrocarbon supplying means 22.

Though a specific kind of the unsaturated hydrocarbon used in the hydrogenating means 18 is not specifically limited, it is possible to preferably use aromatic compounds, being a liquid at a room temperature such as toluene. For example, when toluene is used as unsaturated hydrocarbon, the obtained unsaturated hydrocarbon is methylcyclohexane. However, because, for example, anthracene, Phenanthrene, etc. may be liquids depending on the condition of the additive reaction, when a hydrogenation reaction is made under such a condition, it is enough to use aromatic compound. Using these aromatic compounds, it is possible to store further more hydrogen.

Because such aromatic compounds are liquids at a room temperature, it is easy to store them and has an advantageous effect in that a reaction interface becomes large when the hydrogenation reaction is performed. Further, when the aromatic compound are used, it is possible to increase an amount of substance of hydrogen which can be added per one molecule of the aromatic compound, so that the more hydrogen can be stored with the fewer amount of unsaturated hydrocarbon. Further, as the unsaturated hydrocarbon it is allowed to use one kind of unsaturated hydrocarbon and also allowed to use more than one kinds of unsaturated hydrocarbon.

In the hydrogenating means 18, there is no specific limit in the method of adding hydrogen to the unsaturated hydrocarbon. However, from a viewpoint of low cost and short reaction time, generally hydrogen is added to the unsaturated hydrocarbon using catalyst. As such catalysts, there are, for example, metals such as Ni, Pd, Pt, Rh, Ir, Re, Ru, Mo, W, V, Os, Cr, Co, Fe, etc. and alloys of these metals. Regarding the metals and these alloys forming the catalyst, one kind of the may be used solely or more than one kind of them may be used at a given ratio in a combination.

Further, it is preferable that these catalysts are micronized from viewpoint of a further low cost by decrease in the amount of catalyst and increase in reaction surface. When the micronized catalyst is used, the catalyst may be carried with a given holder to prevent decrease in the surface area by condensation of the micronized catalyst. When the catalyst is carried by the carrier, there is no limit in the method of carrying the catalyst. For example, a coprecipitation method, a thermal decomposition method, an electroless deposition method, etc are usable. Further, there is no limit in the kind of the carriers. For example, in addition to, for example, carbon materials, such as activated carbon,, carbon nanotubes, graphite, etc., alumina silicate, etc. such as silica, alumina, zeolite, etc. are usable. As a carrier, one kind of carrier is usable and more than one kind of carriers are usable, and more than one kind of carriers are usable in combination at a given ratio.

A condition of hydrogenation reaction to the unsaturated hydrocarbon in hydrogenating means 18 is not specifically limited, and it may be set arbitrary. For example, the reaction temperature may be a room temperature (at about 25°C) at which hydrogen can be added. However, it is preferable to perform addition at a temperature not greater than 100°C and being under at a temperature not smaller than 400°C to shorten the reaction interval.

Further, though a reaction pressure during the hydrogenation reaction is not specifically limited, it is preferable to set the pressure during hydrogenation to a pressure of not smaller than one atm and not greater than 50 atm (i.e., not smaller than 0. 1 M Pa and not greater than 5 MPa). Accordingly, though not shown in Fig. 8, it is possible to provide a pressure regulator between the buffer tank 14 and the hydrogenating means 18 to increase the pressure at hydrogenating.

As described above, hydrogen can be added to the unsaturated hydrocarbon, so that saturated hydrocarbon is obtained. The obtained saturated hydrocarbon (so-called is organic hydride) is stored in the saturated hydrocarbon storing tank 17.

The tubing pump 13 has a specification which is determined by a characteristic of the electrolytic solution, a flow rate to the hydrogen production device, and is connected to the electrolytic solution tank 15 and the hydrogen producing device 2 through piping.

The saturated hydrocarbon stored in the saturated hydrocarbon tank is separated into hydrogen and unsaturated hydrocarbon with the reactor 19.

The reactor 19 separates the saturated hydrocarbon into hydrogen and unsaturated hydrocarbon and is connected to the saturated hydrocarbon storing tank 17 through the saturated hydrocarbon supplying means 21 for the saturated hydrocarbon and the unsaturated hydrocarbon tank 16 with liquid piping. Accordingly, the saturated hydrocarbon is supplied from the saturated hydrocarbon storing tank 17 to the reactor 19 through the saturated hydrocarbon supplying means 21.

Though a specific kind of the unsaturated hydrocarbon used in the reactor 19 is not limited, for example, aromatic compounds such as toluene, etc. are preferably usable. For example, when toluene is used as the unsaturated hydrocarbon, the obtained saturated hydrocarbon is methylcyclohexane, wherein it is preferable that the substance processed by the hydrogenating means 18 can be recycled. More specifically, the reactor 19 may have the same material and the same structure as the hydrogenating means 18 or a different material and a different structure from the hydrogenating means 18. That is, there is no limit in specific method of separation into the unsaturated hydrocarbon and the hydrogen. However, generally, separation is made into the unsaturated hydrocarbon and hydrocarbon from viewpoint of cost reduction and shortening the reaction period. As the catalyst, for example, there are metals such as Ni, Pd, Pt, Rh, Ir, Re, Ru, Mo, W, V, Os, Cr, Co, Fe, etc. or alloys of these metals. The metals or alloys forming the catalyst may be one kind of metal or combination of more than one kind of metals at a given ratio.

In addition, it is preferable that these catalysis are micronized from viewpoints of a further cost reduction by decreasing a quantity of the catalyst and increasing a reaction surface area. When the micronized catalyst is used, the catalyst may be carried by a given carrier from viewpoint of preventing the surface area from decreasing by condensation of the micronized catalyst. When the catalyst is carried by a carrier, a method of carrying is not specifically limited. For example, the coprecipitation method, a thermal decomposition method, an electroless deposition, etc can be used. Further, there is no specific limit in the kind of the carrier. For example, in addition to, for example, carbon materials, such as activated carbon, carbon nanotubes, graphite, etc., alumina silicate, etc. such as silica, alumina, zeolite, etc. are usable. As a carrier, one kind of carrier is usable and more than one kind of carriers are also usable, and more than one kind of carriers are usable in combination at a given ratio.

A condition of separation reaction to the unsaturated hydrocarbon and the hydrogen in the reactor 19 is not specifically limited, and it may be set arbitrary. For example, it is possible to separate hydrogen at a reaction temperature at a room temperature (at about 25°C). However, from viewpoint of high pressure and shortening the reaction time, it is preferable to hydrogenate at a temperature about not smaller than 100°C and not greater than 500°C. In addition, a system efficiency can be enhanced by using thermal energy for heating a renewable energy such as geothermal energy and sun light, and heat energy (exhausted heat) exhausted from peripheral devices.

Further, there is no specific limitation in a reaction pressure during the separation reaction, the pressure during the hydrogen separation is preferably at a pressure not smaller than one atm and not greater than 50 atm (i.e., not smaller than 0.1 MPa and not greater than 5 MPa) in gauge pressure. Accordingly, though not shown in Fig. 8, to increase a pressure during hydrogen separation, a pressure regulator may be installed.

As described above, separation into unsaturated hydrocarbon and hydrogen can be done to provide unsaturated hydrocarbon which is collected in the unsaturated hydrocarbon tank 16 and is used for recycling.

The separated hydrogen is used in the power generating means 20 to supply a power. This can moderate the grid load variation. As the power generating means 20, there are a hydrogen combustion engine-generator, a fuel cell, etc. However, there is no specific limitation as long as it is application which can perform power conversion with hydrogen gas.

Further, a circumstance in which these sequential operations are made is not limited, and may be performed in a given circumstance as long as the problem can be solved. In addition, it is not necessary to install all devices at the same area or point. For example, the hydrogen producing device 2 can be installed in a room, and the hydrogenating means 18 is installed outdoors, and only saturated hydrocarbon is taken out from the saturated hydrocarbon storing tank 17 and transported. At a different area, power is supplied through the reactor 19 and the power generating means 20 or used as drive power fuel, so that installation and usage are arbitrarily.

As described above, the photovoltaic power generation system 200 including the hydrogen producing means according to the second embodiment, can use, store, and supply the solar light energy at a high efficiency.

### [3. Third embodiment]

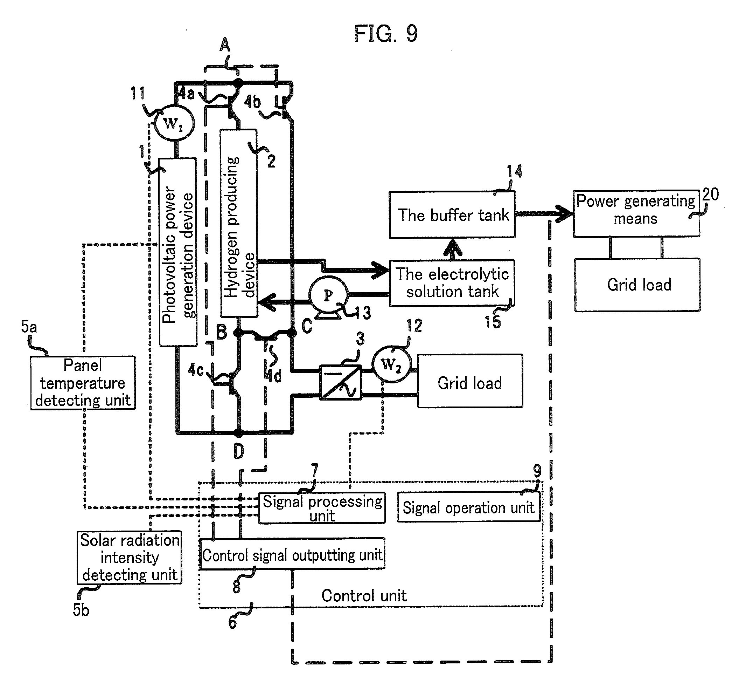

Fig. 9 is a drawing schematically showing a configuration of the photovoltaic power generation system including the hydrogen producing means according to a third embodiment. In Fig. 9, solid lines indicate electric wirings, braked lines indicates switching signal output lines, dotted lines indicates signal measuring lines, and double lines indicates fuel (gas, liquid), respectively. They are wiring and piping connecting these means and indicates transmission and reception of signals, energy and substances.

As shown in Fig. 9, a photovoltaic power generation system 300 including the hydrogen producing means according to the third embodiment can perform electric power supply and storage and supply for the solar light energy at a high efficiency. Relative to the photovoltaic power generation system 100 shown in Fig. 1, the photovoltaic power generation system 300 newly includes a photovoltaic power generation quantity prediction source detection unit 5, being a data source for predicting a photovoltaic power generation quantity and including: a panel temperature detecting unit 5a and a solar radiation intensity detecting unit 5b, the tubing pump 13 for supplying the electrolytic solution to the hydrogen producing device, the electrolytic solution tank 15, containing the electrolytic solution for performing gas-liquid separation into hydrogen gas and the electrolytic solution, the buffer tank 14 for purifying the hydrogen; the power generating means 20 as an electric power supplying means using the hydrogen gas. The photovoltaic power generation system 300 includes this configuration at least. The photovoltaic power generation system 300 having the above-described configuration is applied to a renewable energy.

The photovoltaic power generation quantity prediction source detection unit 5 includes the panel temperature detecting unit and the solar radiation intensity detecting unit and can estimate power generation predicted power W₀. Regarding a panel temperature detection method, a thermocouple is used for measurement and the solar radiation intensity can be measured with all-weather actinometer. However, the detection method can be determined in accordance with a use environment, but not limited.

Further, power generation can be performed by the power generating with the hydrogen gas released from the buffer tank 14. Regarding this, it is preferable to have a function of controlling a supply quantity of the hydrogen gas to the power generating means with a pressure valve, etc. at the buffer tank 14. With the configuration described above, the generated power can be controlled.

As described above, the photovoltaic power generation system 300, including the hydrogen producing means, according to the third embodiment can use, store, and supply the photovoltaic energy at a high efficiency.

### DESCRIPTION OF REFERENCE SYMBOLS

- 1: photovoltaic power generation device
- 2: hydrogen producing device
- 3: power conversion controller
- 4: switching means
- 5: photovoltaic power generation quantity prediction source detection unit
- 6: control unit
- 7: signal processing unit
- 8: control signal outputting unit
- 9: signal operation unit
- 11: power detector
- 12: electric power detecting unit
- 13: tubing pump
- 14: buffer tank
- 15: electrolytic solution tank
- 16: unsaturated hydrocarbon tank
- 17: saturated hydrocarbon storing tank
- 18: hydrogenating means
- 19: reactor
- 20: power generating means
- 21: saturated hydrocarbon supplying means
- 22: unsaturated hydrocarbon supplying means

## Claims

1. A photovoltaic power generation system including hydrogen producing means for storing photovoltaic energy, comprising:
a photovoltaic power generation device for converting photovoltaic energy into a DC power;
a power conversion controller including an output control function of converting the DC power obtained by the photovoltaic power generation device into an AC power to obtain a maximum electric power, the hydrogen producing means producing hydrogen using the DC power obtained by the photovoltaic power generation device;
electric power detecting means for detecting an output power W₁ of the photovoltaic power generation device and an output power W₂ of the power conversion controller;
switching means for making switching electrical connection configuration among the photovoltaic power generation device, the power conversion controller, and the hydrogen producing means;
a control unit for transmitting a control signal to the switching means, wherein
a rated output of the photovoltaic power generating device is set to be greater than a rated output of the power conversion controller, wherein
the control unit includes electric power predicting means for calculating a power generation prediction power W₀ that the photovoltaic power generation device can generate, and wherein
the switching means is controlled in accordance with a comparison result between the power generation prediction power W₀ estimated by the electric power predicting means and the output power W₁ or the output power W₂, detected by the electric power detecting means and a conversion efficiency characteristic of the power conversion controller.

2. The photovoltaic power generation system as claimed in claim 1, wherein
the control unit calculates the conversion efficiency of the power conversion controller from the output power W₁ and the out power W₂, detected by the electric power detecting means, connects the photovoltaic power generation device to the power conversion controller or both the power conversion controller and the hydrogen producing means when the conversion efficiency of the power conversion controller is equal to or greater than a predetermined value,, and connects
the photovoltaic power generation device to the hydrogen producing means when the conversion efficiency of the power conversion controller is smaller than the predetermined value.

3. The photovoltaic power generation system as claimed in claim 2, wherein
the control unit compares the power generation prediction power W₀ estimated by the electric power predicting means with the output power W₁ or the output power W₂, detected by the electric power detecting means and connects both the power conversion controller and the hydrogen producing means to the photovoltaic power generation device.

4. The photovoltaic power generation system as claimed in claim 1, wherein the electric power predicting means calculates the power generation prediction power W₀ on the basis of a solar radiation intensity or a panel temperature of the photovoltaic power generation device which is calculated from the output power W₁ detected by the electric power detecting means and a rated output power of the photovoltaic power generation device.

5. The photovoltaic power generation system as claimed in claim 1, further comprising
at least one of a temperature detecting means for detecting a panel temperature of the photovoltaic power generation device and a solar radiation intensity detecting means for detecting a solar radiation intensity, wherein
the power prediction means calculates a power generation prediction power W₀ on the basis of information detected by the temperature detecting means or the solar radiation intensity detecting means.

6. The photovoltaic power generation system as claimed in claim 1, wherein the hydrogen producing means is an electrolyzer for generating the hydrogen and oxygen by electrolyzing water.

7. The photovoltaic power generation system as claimed in claim 2, wherein the predetermined value for the conversion efficiency in the power conversion controller is set on the basis of a conversion efficiency in that the hydrogen producing means converts electric power into the hydrogen.

8. The photovoltaic power generation system as claimed in claim 2, further comprising a power generating means for generating an electric power from a fuel of the hydrogen produced by the hydrogen producing means.

9. The photovoltaic power generation system as claimed in claim 2, further comprising hydrogen storing means for converting unsaturated hydrocarbon into saturated hydrocarbon by charging the hydrogen produced by the hydrogen producing means to unsaturated hydrocarbon and storing the saturated hydrocarbon.

10. The photovoltaic power generation system as claimed in claim 9, further comprising a reactor for generating hydrogen through dehydrogenation reaction to unsaturated hydrocarbon stored in the hydrogen storing means.

11. The photovoltaic power generation system as claimed in claim 10, further comprising a power generating means for generating an electric power with a fuel of the hydrogen produced by the reactor.

12. The photovoltaic power generation system as claimed in claim 8, wherein the predetermined value for the conversion efficiency of the power conversion controller is set on the basis of the electric power supplying efficiency when the electric power is generated by the power generating means through the hydrogen producing means.

13. The photovoltaic power generation system as claimed in claim 2, wherein the hydrogen producing means configured including a plurality of electrolyzers electrically connected and comprising control means for switching an electrical connection configuration of a plurality of the electrolyzers and the number of electrolyzers in operation.

14. The photovoltaic power generation system as claimed in claim 13, wherein the connection configuration of a plurality of the electrolyzers and the number of the electrolyzers in operation is switched in accordance with an input power specification and a conversion efficiency of the power conversion controller.
